# EUROPÄISCHE PATENTSCHRIFT

(11) **EP 2 825 792 B1**
(45) Veröffentlichungstag und Bekanntmachung des Hinweises auf die Patenterteilung: **13.04.2016**
(21) Anmeldenummer: 12810098.9
(22) Anmeldetag: 19.12.2012
(51) Int. Cl.: F16H 61/12, F16H 59/12, F16H 59/02

(54) **AUTOMATIKGETRIEBE MIT EINEM BEDIENELEMENT**
AUTOMATIC TRANSMISSION WITH AN OPERATING ELEMENT
TRANSMISSION AUTOMATIQUE COMPRENANT UN ÉLÉMENT DE COMMANDE

(30) Priorität: 13.03.2012 DE 102012005236
(43) Veröffentlichungstag der Anmeldung: 21.01.2015
(73) Patentinhaber: Audi AG, 85045 Ingolstadt (DE)
(72) Erfinder: BAUER, Martin, 85053 Ingolstadt (DE); EICHLER, Johann, 85051 Ingolstadt (DE); SCHMAHL, Hennig, 85055 Ingolstadt (DE); HEIDRICH, Iwo, 85386 Eching (DE)
(74) Vertreter: Brandt, Kai
(86) Internationale Anmeldenummer: PCT/EP2012/005244
(87) Internationale Veröffentlichungsnummer: WO 2013/135261

(56) Entgegenhaltungen:
- DE-A1- 10 260 168
- US-A1- 2007 204 710

## Beschreibung

Die Erfindung betrifft ein Automatikgetriebe mit einem Bedienelement, das wenigstens eine an einem Lenkrad angeordnete, manuell betätigbare Schaltwippe aufweist, die einen Sensor zum Erfassen der Betätigung umfasst und über einen Signalpfad mit einem Getriebesteuergerät des Automatikgetriebes verbunden ist.

Heutzutage wird bei Fahrzeugen mit automatischem Getriebe die von einem Fahrer gewählte Fahrstufe (P, R, N, D, M, S) über ein Schaltsignal elektronisch erfasst und über einen Datenbus an das Getriebesteuergerät übertragen. Diese Technik wird als shift-by-wire bezeichnet. Dabei weisen Fahrzeuge mit automatischem Getriebe zumeist ein Lenkrad mit wenigstens einer Schaltwippe auf, um Gänge manuell schalten zu können. Die Schaltwippen weisen üblicherweise einen Mikroschalter auf, die Übertragung des Signals an das Getriebesteuergerät ist nicht abgesichert.

In der EP 2 101 086 A1 wird ein Bedienelement für ein Automatikgetriebe beschrieben, bei dem die Auswahl von Fahrstufen und Gangstufen mittels Schaltwippen am Lenkrad erfolgt.

Aus der DE 102 41 014 A1 ist ein Automatikgetriebe mit einem Bedienelement bekannt, bei dem bei einer manuellen Betätigung eines Bedienelements Informationen über ein Bussystem an eine elektronische Getriebesteuerung übertragen werden.

In der DE 100 18 661 A1 wird ein Bedienelement zum Wechseln einer Fahr- oder Gangstufe eines Automatikgetriebes vorgeschlagen, Schaltinformationen werden dabei über ein fahrzeugeigenes Bussystem übertragen.

Herkömmliche Automatikgetriebe weisen den Nachteil auf, dass durch eine Betätigung der Schaltwippen aus Sicherheitsgründen keine Fahrstufen gewählt werden können. Beispielsweise wäre es wünschenswert, aus der Fahr-oder Gangstufe P, R, N direkt über eine Betätigung einer Schaltwippe nach M zu wechseln, um ein manuelles Vorwärtsfahrprogramm einzuschalten. Da derartige Schaltvorgänge als sicherheitsrelevante Funktionen eingestuft sind, kann die Fahrstufenwahl nicht über eine einfache Betätigung einer mit "+" oder ,,-,, gekennzeichneten Schaltwippe erfolgen.

Die DE 102 60168 A1 offenbart ein Automatikgetriebe nach dem Oberbegriff des unabhängigen Anspruchs 1.

Der Erfindung liegt daher die Aufgabe zugrunde, ein Automatikgetriebe mit einem Bedienelement anzugeben, bei dem sicherheitsrelevante Schaltvorgänge mittels Schaltwippen ausgeführt werden können.

Zur Lösung dieser Aufgabe ist bei einem Automatikgetriebe der eingangs genannten Art erfindungsgemäß vorgesehen, dass die Schaltwippe und das Getriebesteuergerät zusätzlich über einen von dem Signalpfad unabhängigen zweiten Signalpfad miteinander verbunden sind.

Die Erfindung beruht auf der Idee, dass eine herkömmliche Sensierung und Übertragung von Schaltwippensignalen um eine zweite, davon unabhängige Erkennung und Übertragung erweitert werden kann, so dass sicherheitsrelevante Funktionen mit den Schaltwippen ausgeführt werden können. Bei dem erfindungsgemäßen Automatikgetriebe können mittels des Bedienelements neue Funktionen dargestellt werden, die bei herkömmlichen Automatikgetrieben aus Sicherheitsgründen gesperrt sind. Dazu zählt das Wählen von Fahrstufen oder Gangstufen durch die Betätigung von Schaltwippen am Lenkrad. Beispielsweise könnte die Gangstufe N durch eine Betätigung beider Schaltwippen am Lenkrad eingeschaltet werden.

Eine Variante der Erfindung sieht vor, dass die Schaltwippe zwei Sensoren aufweist und jedem Sensor ein Signalpfad zugeordnet ist. Der zweite Signalpfad kann dabei ein diskreter Signalpfad sein, der erste, herkömmliche Signalpfad kann Bestandteil eines Bussystems sein.

Bei dem erfindungsgemäßen Automatikgetriebe wird es bevorzugt, dass der oder ein Sensor als Mikroschalter, digitaler oder analoger Hall-Sensor, kapazitiver Sensor, induktiver Sensor oder als Lichtschranke ausgebildet ist. Sofern die Schaltwippe zwei Sensoren aufweist, kann es sich auch um unterschiedliche Sensoren handeln, beispielsweise kann eine Schaltwippe einen Mikroschalter und zusätzlich einen kapazitiven Sensor aufweisen.

Alternativ ist bei dem erfindungsgemäßen Automatikgetriebe jedoch auch eine Variante möglich, bei der die Schaltwippe einen einzigen Sensor aufweist, dessen Sensorsignal von zwei separaten Auswerteeinheiten ausgewertet wird.

Es liegt auch im Rahmen der Erfindung, dass der Sensor über ein Widerstandsnetzwerk mit einem Eingang einer Auswerteeinheit verbunden ist.

Daneben betrifft die Erfindung ein Kraftfahrzeug. Das erfindungsgemäße Kraftfahrzeug zeichnet sich dadurch aus, dass es ein Automatikgetriebe mit einem Bedienelement der beschriebenen Art aufweist.

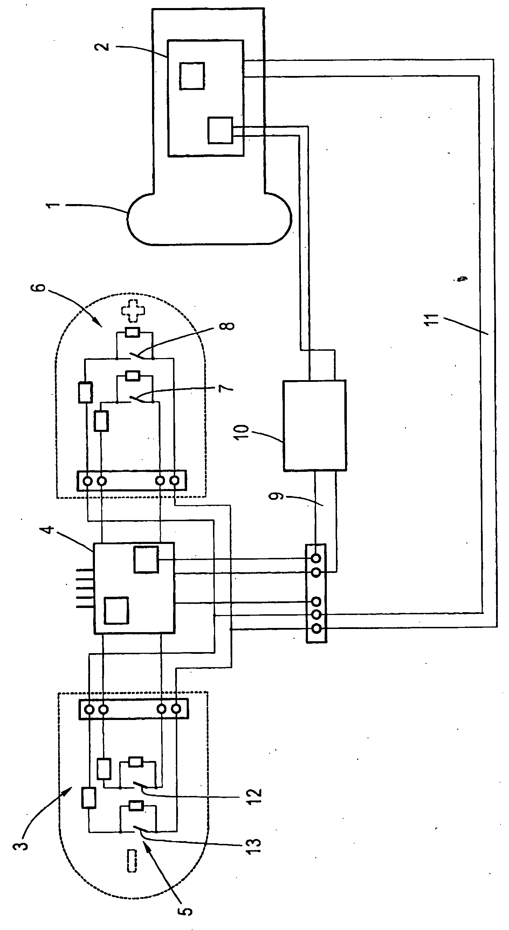

Die Erfindung wird nachfolgend anhand eines Ausführungsbeispiels unter Bezugnahme auf die Zeichnung erläutert.

Die Zeichnung zeigt in schematischer Weise ein erfindungsgemäßes Automatikgetriebe mit einem Bedienelement.

Einem Automatikgetriebe 1 ist ein Getriebesteuergerät 2 zugeordnet. Ein Multifunktionslenkrad 3 umfasst ein Steuergerät 4, das mit zwei Schaltwippen 5, 6 verbunden ist. Jede Schaltwippe 5, 6 weist zwei Mikroschalter 7, 8, bzw. 12, 13 auf. Die Schaltwippen 5, 6 sind mit den Symbolen "+" bzw. "-" bedruckt, dementsprechend wird beim Betätigen des mit "+" beschrifteten Abschnitts der Schaltwippe 6 der Schaltkontakt der Mikroschalter 7 und 8 geschlossen, beim Betätigen des mit "-" bedruckten Abschnitts wird der Schaltkontakt der Mikroschalter 12 und 13 geschlossen. Die Mikroschalter 7, 12 sind über ein Widerstandsnetzwerk mit einem Analogeingang des Steuergeräts 4 (Auswerteeinheit) des Multifunktionslenkrads 3 verbunden, so dass Kurzschlüsse nach Plus oder Minus, Unterbrechungen oder Nebenschlüsse erkannt werden können. Das Steuergerät 4 des Multifunktionslenkrads 3 wertet ein Schaltsignal aus und gibt ein plausibilisiertes Signal über einen Datenbus 9 aus. Der Datenbus 9 kann einen Gateway 10 aufweisen und ist mit dem Getriebesteuergerät 2 verbunden.

Das Tastensignal der Schaltwippen 5, 6 wird zusätzlich über zweite Mikroschalter 8, 13 detektiert, deren Schaltpunkt demjenigen der Mikroschalter 7, 12 entspricht. Die zweiten Mikroschalter 8, 13 sind über ein Widerstandsnetzwerk und den Kabelbaum 11 des Kraftfahrzeugs direkt und diskret mit dem Getriebesteuergerät 2 verbunden. Durch das Widerstandsnetzwerk werden Kurzschlüsse nach Plus und Minus, Unterbrechungen und Nebenschlüsse vom Getriebesteuergerät 2 erkannt, so dass das über den Kabelbaum 11 übertragene Rohsignal plausibilisiert werden kann. Der Kabelbaum 11 des Fahrzeugs entspricht somit einem zweiten Signalpfad, so dass Schaltsignale einerseits über den Datenbus 9 und andererseits über den Kabelbaum 11 übertragen werden. Dementsprechend werden über den ersten Signalpfad (Datenbus 9) Schaltsignale der Mikroschalter 7, 12 übertragen, über den zweiten Signalpfad (Kabelbaum 11) werden Schaltsignale der Mikroschalter 8, 13 übertragen. Durch die Bereitstellung von zwei separaten und unabhängigen Signalpfaden wird eine Redundanz erzielt. Wenn der erste Signalpfad, d. h. der Datenbus 9 benutzt wird, erfolgt die Datenübertragung über das Multifunktionslenkrad 3, wenn der zweite Signalpfad benutzt wird, erfolgt die Datenübertragung über diskrete Leitungen, nämlich den Kabelbaum 11.

Durch die beiden Auswertepfade Datenbus 9 und Kabelbaum 11 stehen dem Getriebesteuergerät 2 zwei vollständig unabhängige Signale zur Verfügung, die wiederum gegeneinander plausibilisiert werden können. Mit dieser über die gesamte Signalkette sichergestellten Redundanz können sicherheitsrelevante Funktionen ausgeführt werden: Wenn bei der Schaltwippe 6 über beide Signalpfade "+" erkannt wird, wird die Fahrstufe M eingelegt, dies ist auch aus den Fahrstufen bzw. Gangstufen P, R und N möglich. Andererseits, wenn über beide Signalpfade eine gleichzeitige Betätigung beider Schaltwippen 5 und 6 erkannt wird, wird die Gangstufe N eingelegt, sofern vorher eine der Fahr-oder Gangstufen P, R, D, S oder M eingelegt war.

Die Signalauswertung für den Gangwechsel kann auf den zweiten Signalpfad (Kabelbaum 11) beschränkt werden, da aufgrund der diskreten, eine kleine Übertragungslatenz aufweisenden Verbindung zum Getriebesteuergerät 2 die Signale deutlich schneller vorliegen.

Bei anderen Ausführungen können anstelle von Mikroschaltern zur Sensierung auch andere Sensoren verwendet werden, beispielsweise digitale oder analoge Hall-Sensoren, kapazitive Sensoren, induktive Sensoren, Lichtschranken oder dergleichen. Anstelle von zwei Sensoren pro Schaltwippe kann ein einziger Sensor verwendet werden, dessen Sensorsignal auf zwei unterschiedlichen Wegen von zwei unterschiedlichen Auswerteeinheiten ausgewertet wird. Anstelle eines Widerstandsnetzwerks kann auch jeweils ein im Multifunktionslenkrad und/oder Getriebesteuergerät vorgesehener digitaler Eingang oder ein analoger Eingang ohne Widerstandskodierung verwendet werden.

## Patentansprüche

1. Automatikgetriebe (1) mit einem Bedienelement, das wenigstens eine an einem Lenkrad (3) angeordnete, manuell betätigbare Schaltwippe (5, 6) aufweist, die einen Sensor zum Erfassen der Betätigung umfasst und über einen ersten Signalpfad mit einem Getriebesteuergerät (2) des Automatikgetriebes (1) verbunden ist,
**dadurch gekennzeichnet,**
**dass** die Schaltwippe (5, 6) und das Getriebesteuergerät (2) zusätzlich über einen von dem ersten Signalpfad unabhängigen zweiten Signalpfad miteinander verbunden sind, wobei ein Signalpfad als Kabelbaum (11) und der andere Signalpfad als Datenbus (9) ausgebildet ist.

2. Automatikgetriebe nach Anspruch 1,
**dadurch gekennzeichnet,**
**dass** die Schaltwippe (5, 6) zwei Sensoren aufweist und jedem Sensor ein Signalpfad zugeordnet ist.

3. Automatikgetriebe nach Anspruch 1,
**dadurch gekennzeichnet,**
**dass** die Schaltwippe (5, 6) einen einzigen Sensor aufweist, dessen Sensorsignal von zwei separaten Auswerteeinheiten ausgewertet wird.

4. Automatikgetriebe nach einem der vorangehenden Ansprüche,
**dadurch gekennzeichnet,**
**dass** der Sensor bzw. die Sensoren als Mikroschalter (7, 8, 12, 13), digitaler oder analoger Hall-Sensor, kapazitiver Sensor, induktiver Sensor oder als Lichtschranke ausgebildet ist bzw. sind.

5. Automatikgetriebe nach Anspruch 1 oder nach Anspruch 3 oder nach Anspruch 4 und Anspruch 3,
**dadurch gekennzeichnet,**
**dass** der Sensor über ein Widerstandsnetzwerk mit einem Eingang einer Auswerteeinheit verbunden ist.

6. Kraftfahrzeug,
**dadurch gekennzeichnet,**
**dass** es ein Automatikgetriebe nach einem der Ansprüche 1 bis 5 aufweist.

## Claims

1. Automatic gearbox (1) with a control element having at least one manually operated shift paddle (5, 6) arranged on a steering wheel (3) that includes a sensor for detecting the operation and is connected via a first signal path with a gearbox control unit (2) of the automatic gearbox (1), **characterised in that** the shift paddle (5, 6) and the gearbox control unit (2) are additionally connected via a second signal path, independent of the first signal path, in which one signal path takes the form of a wiring harness (11) and the other signal path takes the form of a data bus (9).

2. Automatic gearbox according to claim 1, **characterised in that** the shift paddle (5, 6) has two sensors and each sensor is assigned to one signal path.

3. Automatic gearbox according to claim 1, **characterised in that** the shift paddle (5, 6) has a single sensor, the sensor signal from which is processed by two separate processing units.

4. Automatic gearbox according to one of the previous claims, **characterised in that** the sensor or sensors take the form of microswitches (7, 8, 12, 13), digital or analogue Hall sensors, inductive sensors or light barriers.

5. Automatic gearbox according to claim 1 or according to claim 3 or according to claim 4 and claim 3, **characterised in that** the sensor is connected to an input of a processing unit via a resistance network

6. Motor vehicle **characterised in that** it has an automatic gearbox according to one of claims 1 to 5.

## Revendications

1. Transmission automatique (1) comprenant un élément de commande, qui présente au moins une bascule de commutation (5, 6) commandée à la main aménagée sur un volant de direction (3), laquelle bascule comprend un capteur pour enregistrer la commande et est reliée via un premier trajet de signal à un appareil de commande (2) de la transmission automatique (1),
**caractérisée en ce que** :
la bascule de commutation (5, 6) et l'appareil de commande (2) de la transmission sont raccordés en outre l'un(e) à l'autre via un second trajet de signal indépendant du premier trajet de signal, dans laquelle un trajet de signal se présente sous la forme d'un faisceau de câbles (11) et l'autre trajet de signal sous la forme d'un bus de données (9).

2. Transmission automatique selon la revendication 1,
**caractérisée en ce que** :
la bascule de commutation (5, 6) présente deux capteurs et un trajet de signal est affecté à chaque capteur.

3. Transmission automatique selon la revendication 1,
**caractérisée en ce que** :
la bascule de commutation (5, 6) présente un seul capteur dont le signal est exploité par deux unités d'exploitation séparées.

4. Transmission automatique selon l'une quelconque des revendications précédentes,
**caractérisée en ce que** :
le ou les capteurs se présente (nt) sous la forme d'un microrupteur (7, 8, 12, 13), d'un capteur de Hall numérique ou analogique, d'un capteur capacitif, d'un capteur inductif ou d'une barrière lumineuse.

5. Transmission automatique selon la revendication 1 ou la revendication 3 ou la revendication 4 et la revendication 3,
**caractérisée en ce que** :
le capteur est connecté via un réseau de résistances à une entrée d'une unité d'exploitation.

6. Véhicule automobile,
**caractérisé en ce que** :
il présente une transmission automatique selon l'une quelconque des revendications 1 à 5.
